# EUROPEAN PATENT SPECIFICATION

(11) **EP 2 487 906 B1**
(45) Date of publication and mention of the grant of the patent: **27.05.2020**
(21) Application number: 10781580.5
(22) Date of filing: 18.03.2010
(51) Int. Cl.: H04N 7/18, B60R 1/00, G08G 1/16, G06K 9/00

(54) **CONTROL DEVICE AND VEHICLE SURROUNDING MONITORING DEVICE**
STEUERVORRICHTUNG UND UMGEBUNGSÜBERWACHUNGSVORRICHTUNG FÜR EIN FAHRZEUG
DISPOSITIF DE COMMANDE ET DISPOSITIF DE SURVEILLANCE DES ABORDS D'UN VÉHICULE

(30) Priority: 07.10.2009 JP 2009233321
(43) Date of publication of application: 15.08.2012
(73) Proprietor: Panasonic Intellectual Property Management Co., Ltd., Osaka-shi, Osaka 540-6207 (JP)
(72) Inventor: ICHIKAWA, Toru, Osaka-shi, Osaka 540-6207 (JP); OKAMOTO, Shusaku, Osaka-shi, Osaka 540-6207 (JP)
(74) Representative: Grünecker Patent- und Rechtsanwälte PartG mbB
(86) International application number: PCT/JP2010/001959
(87) International publication number: WO 2011/043006

(56) References cited:
- EP-A1- 1 705 623
- WO-A1-2006/106685
- JP-A- 2004 291 784
- JP-A- 2008 271 266
- JP-A- 2009 147 906
- US-A1- 2005 165 550
- US-A1- 2006 080 005

## Description

The present invention relates to a control apparatus used to monitor the surroundings of a vehicle, and a vehicle surrounding monitoring apparatus provided with that control apparatus.

Apparatuses for monitoring the surroundings of a vehicle by taking images of the surroundings of the vehicle using cameras installed in the vehicle have been proposed heretofore. Also, methods for informing a driver of the presence of obstacles or people (hereinafter "obstacles") which the vehicle might hit near the vehicle (especially on the path of an ongoing vehicle), have been proposed heretofore. For example, patent literature 1 discloses dividing a display area on a display apparatus into two, displaying images taken by a camera in the first display area and displaying obstacles detected by image recognition in the second display area.

Furthermore, there is a conventional image monitoring apparatus that monitors the situation in a photographing range and issues a warning only when the image in a detection area defined in advance by the monitoring party using a penlight or the like changes. Patent literature 2 discloses preventing detection errors by issuing a warning only when an intruding object found in a detection area does not touch the outer frame of the detection area. Further examples are disclosed in Patent literatures 3 to 5.

### Patent Literature

[PTL 1]
   Japanese Patent Application Laid-Open No. 2008-174076
[PTL 2]
   Japanese Patent Application Laid-Open No. HEI4-311186
[PTL 3] US 2006/080005 A1
[PTL 4] US 2005/165550 A1
[PTL 5] EP 1 705 623 A1

However, generally speaking, in obstacle detection by image recognition, there is a possibility that detection results reveal detection errors and missed detections due to noise caused by external factors such as the photographing environment or due to the limit of image recognition processing technology. Then, there are cases where these detection errors and missed detections make the monitoring party confused. For example, when a pedestrian is present in a detection area and yet a warning is not issued due to missed detection, it is difficult for the monitoring party to judge whether a warning is not issued because the pedestrian is outside the detection area or because the system is malfunctioning. Consequently, the monitoring party is not able to intuitively sense the risk of collision with obstacles based on the operating conditions of the monitoring apparatus. In other words, simply informing the monitoring party of an obstacle detection result only when an obstacle is detected, can improve the usability for the monitoring party only to a certain limit.

It is therefore an object of the present invention to provide a control apparatus that improves the usability of a vehicle surrounding monitoring apparatus without confusing the monitoring party while monitoring the surroundings of a vehicle, and a vehicle surrounding monitoring apparatus provided with that control apparatus.
This is achieved by the features of independent claim 1.

The invention is defined by the appended claims. According to the present invention, it is possible to improve the usability of a vehicle surrounding monitoring apparatus without confusing the monitoring party while monitoring the surroundings of a vehicle.
FIG.1 is a block diagram showing a configuration of a vehicle surrounding monitoring apparatus according to embodiment 1 of the present invention;
FIG.2 shows a drawing for explaining positions in a vehicle for installing imaging sections, according to embodiment 1 of the present invention;
FIG.3 shows a drawing for explaining an example of a method of setting a detection area, according to embodiment 1 of the present invention;
FIG.4 shows a drawing for explaining another example of a method of setting a detection area, according to embodiment 1 of the present invention;

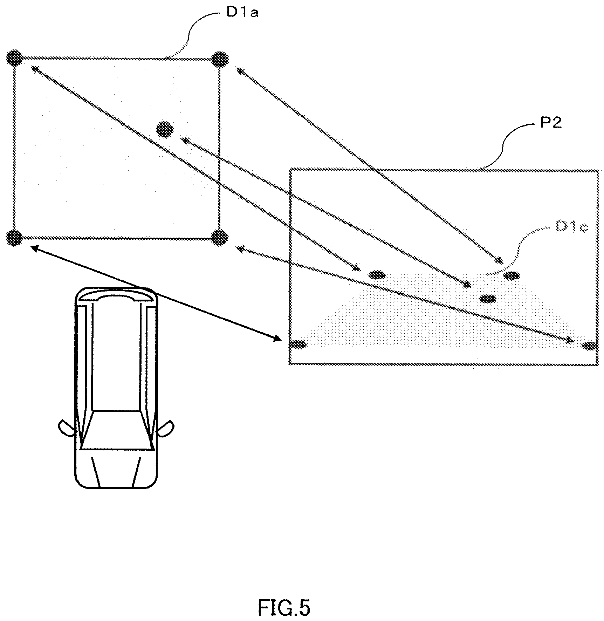

FIG.5 shows a drawing for explaining a method of coordinate conversion in the event a detection area is set by the method of FIG.3;
FIG.6 shows a first example of a display image on which a superimposing detection area is drawn, according to embodiment 1 of the present invention;
FIG.7 shows a second example of a display image on which a superimposing detection area is drawn, according to embodiment 1 of the present invention;
FIG.8 shows a third example of a display image on which a superimposing detection area is drawn, according to embodiment 1 of the present invention;
FIG.9 shows a fourth example of a display image on which a superimposing detection area is drawn, according to embodiment 1 of the present invention;
FIG.10 is a flowchart for explaining the processing by a vehicle surrounding monitoring apparatus according to embodiment 1 of the present invention;
FIG.11A shows a drawing for explaining a method of image conversion according to embodiment of the present invention, showing an image before conversion;
FIG.11B shows a drawing for explaining a method of image conversion according to embodiment 1 of the present invention, showing an image after conversion;
FIG.11C shows a drawing for explaining a method of image conversion according to embodiment 1 of the present invention, showing another example of an image after conversion;
FIG.12 is a block diagram showing a configuration of a vehicle surrounding monitoring apparatus according to embodiment 2 of the present invention;
FIG.13 shows a drawing for explaining a method of operating a detection area, according to embodiment 2 of the present invention;
FIG.14 is a block diagram showing a configuration of a vehicle surrounding monitoring apparatus according to embodiment 3 of the present invention;
FIG.15 shows a drawing for explaining a detection area before and after conversion, according to embodiment 3 of the present invention;
FIG.16 is a block diagram showing a configuration of a vehicle surrounding monitoring apparatus according to embodiment 4 of the present invention;
FIG.17 is a block diagram showing a configuration of a vehicle surrounding monitoring apparatus according to embodiment 5 of the present invention; and
FIG.18 shows a drawing for explaining a detection area before and after conversion, according to embodiment 5 of the present invention.

Now, embodiments of the present invention will be described below in detail with reference to the accompanying drawings.

### (Embodiment 1)

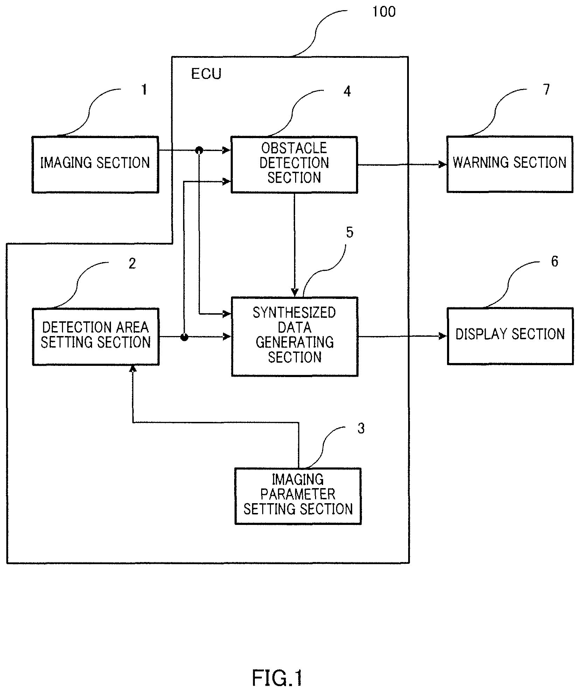

FIG.1 is a block diagram showing a configuration of a vehicle surrounding monitoring apparatus according to embodiment 1 of the present invention.

The vehicle surrounding monitoring apparatus of FIG.1 has an imaging section 1, a detection area setting section 2, an imaging parameter setting section 3, an obstacle detection section 4, a synthesized data generating section 5, a display section 5 and a warning section 7.

The imaging section 1, having one or a plurality of cameras installed in a vehicle, takes images of the surroundings of the vehicle and inputs data of photographed images (hereinafter "photographed data") to the obstacle detection section 4 and synthesized data generating section 5. The kinds of cameras that can be used include CCD (Charge Coupled Device) cameras and CMOS (Complementary Metal Oxide Semiconductor) cameras.

In the following descriptions, the vehicle in which the imaging section 1 is installed in order to monitor the surroundings, will be refereed to as "subject vehicle."

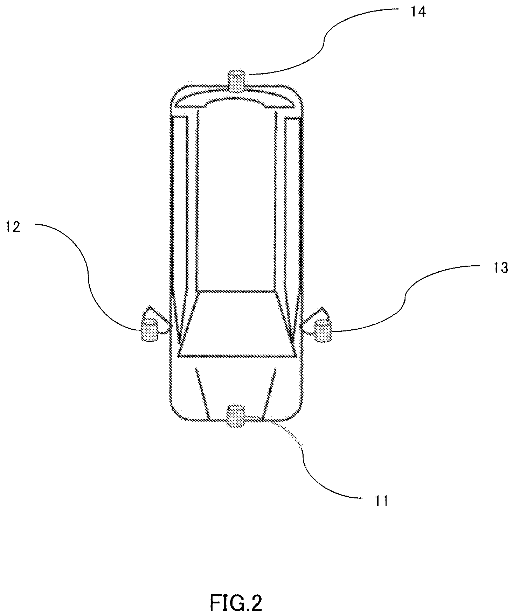

The imaging section 1, provided as an imaging means, is constituted by, for example, as shown in FIG.2, one camera 11 installed in a front part of the subject vehicle, two cameras 12 and 13 installed in the left and right side mirrors of the subject vehicle, and one camera installed in a rear part of the subject vehicle. The front camera 11 takes images of the front of the subject vehicle. The side cameras 12 and 13 take images of the side of the vehicle. The rear camera 14 takes images of the rear (for example, near the number plate or emblem), or, if installed in an uppermost part, takes images behind the subject vehicle. Additional cameras may be installed in corner parts of the vehicle, in the back of the rear-view mirror, or elsewhere. In order to adjust the photographing range according to the purpose of taking images, the installation position, the installation angle, and the kind of the lens are set for each individual camera to be installed.

In the following description of the present embodiment and in all of the subsequent descriptions of embodiments, cases will be described where the imaging section is constituted by a rear camera 14 alone, for ease of explanation.

The detection area setting section 2, imaging parameter setting section 3, obstacle detection section 4 and synthesized data generating section 5 are implemented by executing a software program in an electronic control unit (ECU) 100 installed in the subject vehicle. The control apparatus according to the present embodiment is formed by combining at least the detection area setting section 2, obstacle detection section 4 and synthesized data generating section 5.

The detection area setting section 2, provided as a setting means, sets an obstacle detection area in the photographing range of the imaging section 1. That is to say, a detection area that can be set up may be the same as the photographing range or may be part of the photographing range. The detection area setting section 2 inputs detection area data showing the detection area having been set, to the obstacle detection section 4 and synthesized data generating section 5. The detection area data represents, for example, a group of coordinates to define the detection area.

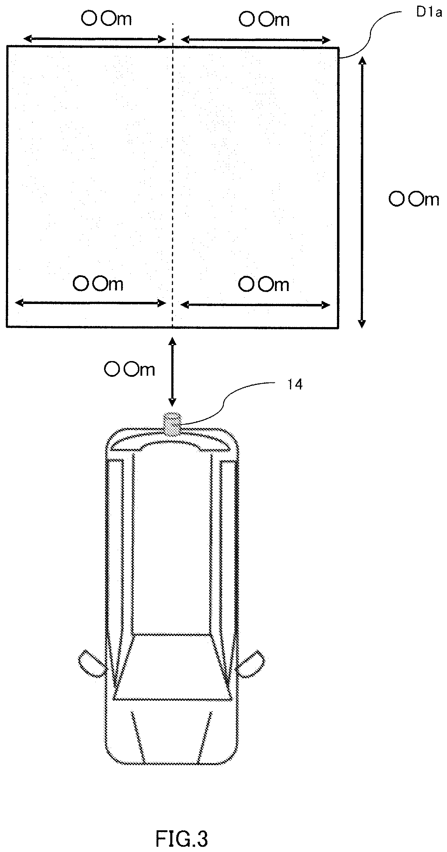

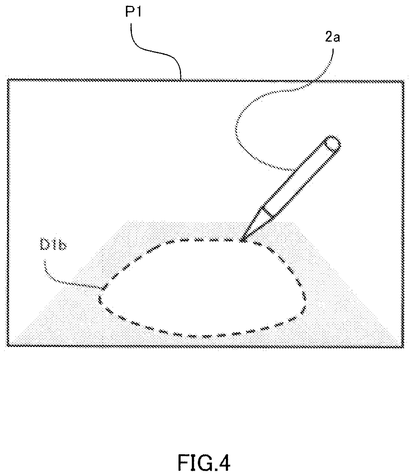

For example, a method of inputting specific numerical values is a possible setting method. To be more specific, for example, as shown in FIG.3, there is a method of specifying the distance from the rear camera 14 to the nearest edge of detection area D1a, the distance from the nearest edge of detection area D1a to the farthest edge of detection area D1a, and the horizontal width of detection area D1a. Furthermore, for example, as shown in FIG.4, there is a method of directly specifying detection area D1b on displayed photographed image P1 using penlight 2a and so forth. The detection area may be comprised of a plurality of discrete areas.

If a detection area is set using a different coordinate system from a photographed image, coordinate conversion needs to be performed for the detection area. This is necessary when, for example, a detection area is set by designating a relative position with respect to the subject vehicle, as shown in FIG.2. In this case, it is preferable to store data that associates between the coordinate system used for the surroundings of the subject vehicle and the coordinate system of the photographed image, such as a conversion table, in a storage apparatus (not shown). By using such a table, it is possible to convert, at ease, detection area D1a set in the coordinate system for the surroundings of the subject vehicle, into detection area D1c suitable to the coordinate system of photographed image P2.

Furthermore, a method of converting three-dimensional coordinates of a detection area into two-dimensional coordinates of a photographed image using imaging parameters described later, is another possible conversion method. For example, if external parameters such as the angle and position for setting a camera on a tripod and internal parameters such as the focal distance are known in advance, it is possible to use a general coordinate conversion method using a pinhole camera model.

The imaging parameter setting section 3 sets, for example, installation parameters upon installing the imaging section 1 in the vehicle. To be more specific, the installation angle and installation position of a camera with respect to a vehicle, information for cutting an input image upon generating an output image (the angle of view, the number of pixels and so on), and various parameters for geometric transformation, are possible parameters. The imaging parameter setting section 3 inputs imaging parameters having been set, in the detection area setting section 2.

The obstacle detection section 4, provided as a detection means, detects obstacles in a detection area set in a photographed image by means of image recognition processing using photographed data and detection area data received as input from imaging section 1 and detection area setting section 2, respectively. The obstacle detection section 4, upon detecting an obstacle, reports that result to synthesized data generating section 5 and warning section 7. Various items of attribute information, including the number, position, size, moving speed and moving direction of detected obstacles, may be reported as detection results.

As a method of image recognition processing that can be used for obstacle detection, there is background subtraction, whereby an obstacle is detected based on the level of aging of the image in a detection area. Furthermore, a method of storing the pattern of a detection target object in a storage apparatus (not shown) as learning data and searching for an area that matches or resembles the learning data in an input image, can be also used. Even other techniques of image recognition processing are also possible, including a method of using moving object recognition following an optical flow, a method of using a three-dimensional object recognition using a stereo method, and a method combining these. The image recognition processing technique to use can be selected depending on system configurations.

The synthesized data generating 5, provided as a processing means, performs image processing to generate display data for drawing a superimposing detection area on a display image, using detection area data received as input from the detection area setting section 2 and photographed data received as input from the imaging section 1. That is to say the synthesized data generating section 5 synthesizes a photographed image with a display object that makes the detection area visible (for example, a line to define the outer edges of the detection area). Display data therefore refers to data to show a synthesized image. The synthesized data generating section 5 inputs display data having been generated, in the display section 6.

The warning section 7 issues a warning based on an obstacle detection result in the obstacle detection section 4. When the obstacle detection section 4 detects an obstacle in the detection area, the warning section 7 issues a warning to inform the driver of the presence of the obstacle. The kinds of warnings that can be use include sound, voice and light, and these can be changed as appropriate depending on the situation.

The display section 6, provided as a display means, is a display apparatus such as, for example, a liquid-crystal display apparatus. A dedicated in-vehicle monitor or a general television monitor can be used, for example. The display section 6 displays images based on display data received as input from the synthesized data generating section 5. The content to be displayed is a result of combining a detection result in the obstacle detection section 4, a detection area set up in the detection area setting section 2, and an input image photographed in the imaging section 1.

The display apparatus used as the display section 6, should preferably have touch-panel functions that make possible input operations for specifying the detection area.

Several examples of display images will be shown now.

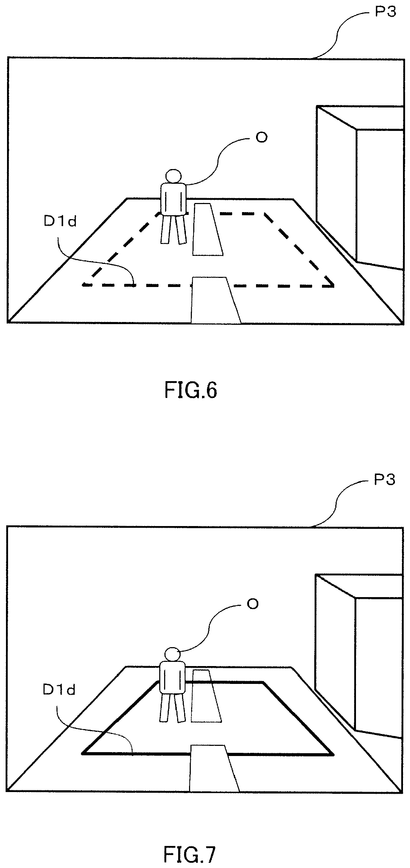

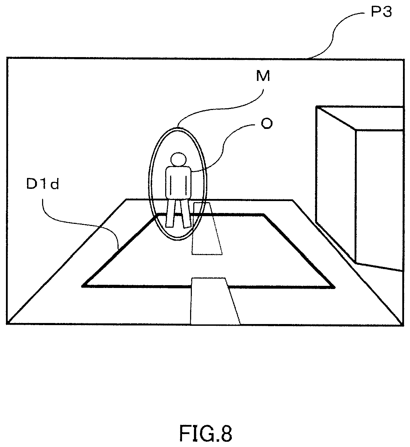

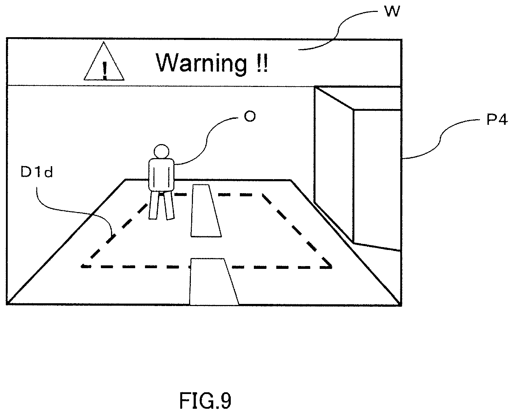

In the example shown in FIG.6, inner-outer boundary parts of detection area D1d are shown so that the situation inside detection area D1d can be checked
In the example shown in FIG.7, detection area D1d is emphasized by drawing (painting) the inside of detection area D1d by a transparent color. The boundary parts here may be shown by broken lines as shown in FIG.6 or by solid lines as shown in FIG.7, or other kinds of lines may be used as well. Referring to display image P3, in the event detected obstacle O and detection area D1d are displayed together, in the objects displayed to identify detection area D1a (drawings of lines and transparent color), parts where the coordinate positions overlap with obstacle O, are not drawn. By this means, the presence of obstacle O on an image can be emphasized. Furthermore, in the example shown in FIG.8, mark M is displayed in the position of obstacle O. In this case, obstacle O can be emphasized even more on an image, so that it is possible to inform the driver of the risk of collision, reliably, in a visual fashion. Furthermore, in the example shown in FIG.9, in the event that obstacle O is detected in detection area D1d, warning message W is displayed above display image P4. In this case, too, it is possible to inform the driver of the risk of collision, reliably, in a visual fashion.

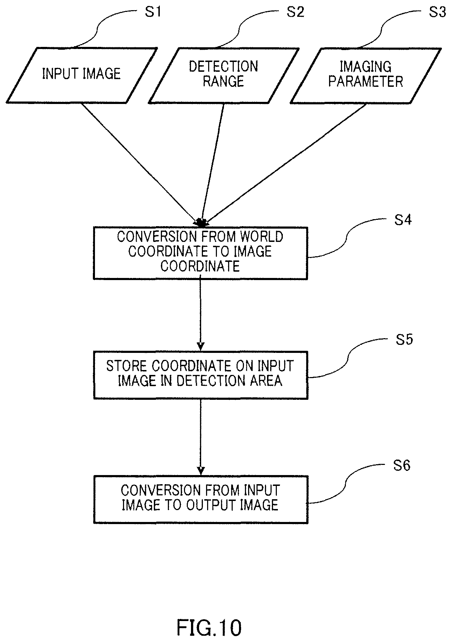

The details of processing will be described using FIG.10. A case will be described here where detection area coordinate conversion is performed using imaging parameters. In the flowchart of FIG.10, an image is taken in the imaging section 1 in step S1, a detection area is specified in the detection area setting section 2 in step S2, and imaging parameters are set in the imaging parameter setting section 3 in step S3.

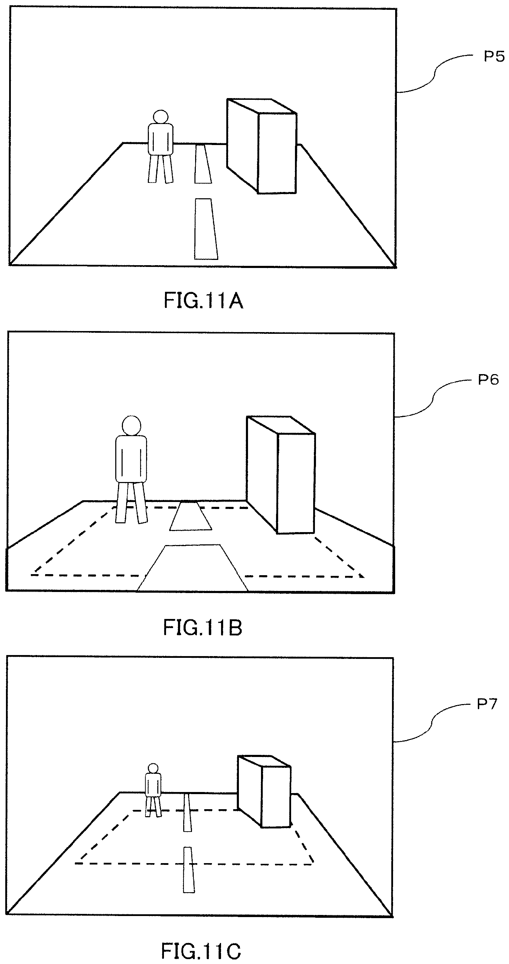

In step 4, in the detection area setting section 2, three-dimensional coordinates of the detection area are converted into image coordinates on an input image, using external parameters in the imaging parameters. This conversion is calculated based on, for example, a pinhole camera model used in general camera image conversion. In step S5, in the synthesized data generating section 5, based on an input image and the detection area subjected to coordinate conversion in S4, the detection area is superimposed upon the input image. The method of this superimposition uses frame display/painting, broken lines/solid lines, and so forth, as described earlier. In step S6, synthesized data generating section 5 converts the input image on which a detection area is superimposed, into an output image for display. As for the method of this conversion, the input image is converted into an output image based on information related to cutting, in the imaging parameters. Referring to input image P5 shown in FIG.11A as an example, display image P6 (FIG.11B), in which the center part of the camera is enlarged, or image P7 of a wider range (FIG.11C), is outputted as a display image. In this case, a detection area is superimposed on the input image and needs not be recalculated in accordance with the output image. Consequently, it is possible to support, at ease, cases where the display image changes depending on applications.

By this means, according to the present embodiment, image processing for surrounding an area subject to obstacle detection (i.e. detection area) in a display image by frames or painting the area by a transparent color is performed, so that the detection area is shown to the driver with a photographed image, distinctly, in a visual fashion. Consequently, even when detection fails or is missed during obstacle detection processing, the deriver is prevented from unnecessary confusion. The drive is able to judge at ease whether a pedestrian is outside the detection area or the system is malfunctioning.

### (Embodiment 2)

The vehicle surrounding monitoring apparatus of embodiment 2 of the present invention will be described now. The vehicle surrounding monitoring apparatus of this embodiment has basically the same configuration as the above embodiment. Therefore, the same components as those of the above embodiment described earlier, will be assigned the same reference numerals and will not be described in detail.

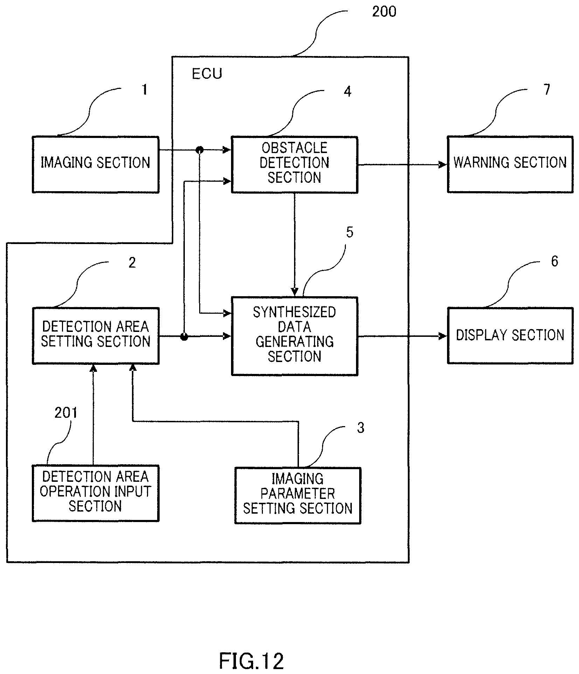

The vehicle surrounding monitoring apparatus of the present embodiment has a configuration adding a detection area operation input section 201 to the configuration described in embodiment 1, as shown in FIG.12. The detection area setting section 2, imaging parameter setting section 3, obstacle detection section 4, synthesized data generating section 5 and detection area operation input section 201 are implemented by executing a software program in an ECU 200 installed in the subject vehicle. The setting means is constituted by combining the detection area setting section 2 and detection area operation input section 201, and the control apparatus according to the present embodiment is constituted by combining at least the detection area setting section 2, detection area operation input section 201, obstacle detection section 4 and synthesized data generating section 5.

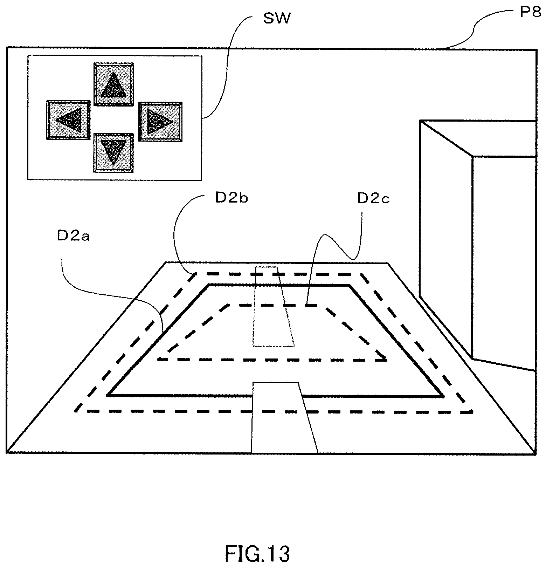

The detection area operation input section 201 receives an operation input for changing the detection area set in the detection area setting section 2, and has this input reflected in the detection area setting. Operation input reception is made possible by, for example, displaying touch panel switch SW that is operable, in display image P8, on a display apparatus having touch panel functions, as shown in FIG.13, and receiving a signal showing a touch panel switch SW operation result, from the display apparatus. For example, if the driver operates touch panel switch SW, original detection area D2a can be changed on an arbitrary basis to, for example, enlarged detection area D2b or reduced detection area D2c. Furthermore, by operations of pressing touch panel switch SW, original detection area D2a can be moved up, down, left and right, on an arbitrary basis.

By this means, according to the present embodiment, the detection area can be set up on a variable basis, according to operation inputs from the monitoring party (e.g. driver). By this means, the actual detection area can reflect the area the monitoring party wants to monitor, thereby improving the usability for the monitoring party even more. Furthermore, a detection area that is displayed can be operated on a display image, thereby allowing the monitoring party to perform changing operations at ease.

### (Embodiment 3)

The vehicle surrounding monitoring apparatus of embodiment 3 of the present invention will be described now. The vehicle surrounding monitoring apparatus of the present embodiment has basically the same configuration as the above embodiments. Therefore, the same components as those of the above embodiments described earlier, will be assigned the same reference numerals and will not be described in detail.

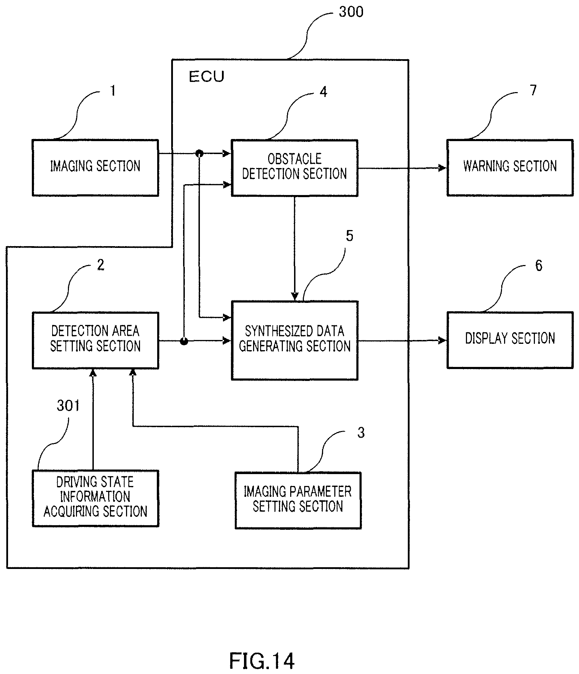

The vehicle surrounding monitoring apparatus of the present embodiment has a configuration adding a driving state information acquiring section 301 to the configuration described in embodiment 1, as shown in FIG.14. The detection area setting section 2, imaging parameter setting section 3, obstacle detection section 4, synthesized data generating section 5 and driving state information acquiring section 301 are implemented by executing a software program in an ECU 300 installed in the subject vehicle. The setting means is constituted by combining the detection area setting section 2 and traveling state information acquiring section 301, and the control apparatus according to the present embodiment is constituted by combining at least the detection area setting section 2, traveling state information acquiring section 301, obstacle detection section 4 and synthesized data generating section 5.

The driving state information acquiring section 301 acquires a subject vehicle driving state detection result as driving state information. The driving sate information acquiring section 301 has this detected driving state in the obstacle detection area setting.

This driving state information refers to, for example, information showing physical quantities in the driving state. Examples of physical quantities to show the driving state include, for example, driving speed and traveling direction. Means that can be used to measure the traveling direction include, for example, a steering angle sensor and an angular velocity sensor, and means that can be used to measure the driving speed include, for example, a vehicle speed meter and accelerometer.

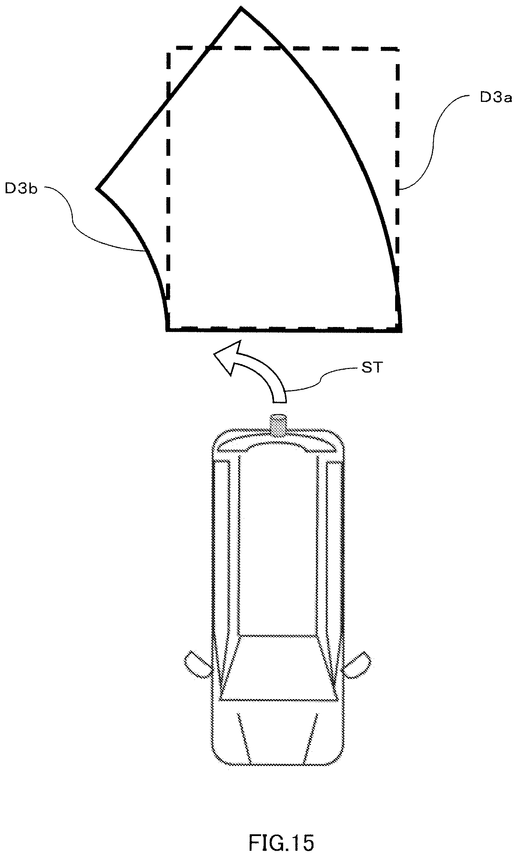

FIG.15 shows an example of variation of a detection area according to a driving state having been detected. While the subject vehicle is moving backward straight, detection area D3a that extends straight along the path is set. If the steering wheel is turned to the right while the subject vehicle is moving backward (in FIG.15, the subject vehicle is shown from above, so that the arrow to show the state of the steering wheel ST turns to the left), curved detection area D3b is set up along a path predicted from that turning of the steering wheel.

By this means, when the state of the steering wheel can be acquired as a state of driving, the obstacle detection area can be adjusted according the turning of the steering wheel.

Furthermore, it is possible to change the detection area depending on the driving speed detected. That is, the detection area can be set on an arbitrary basis by, for example, confining the obstacle detection area to a nearby area of the subject vehicle when the driving speed is slower, and extending the obstacle detection area further when the driving speed is faster.

Thus, when the driving speed can be acquired as a state of driving, it is possible to adjust the obstacle detection area according to the traveling speed.

Thus, according to the present embodiment, it is possible to optimize the detection obstacle detection area for the driving state of the subject vehicle. Furthermore, an optimized detection area is displayed on the display section 6, and the monitoring party can see and check it.

### (Embodiment 4)

The vehicle surrounding monitoring apparatus of embodiment 4 of the present invention will be described now. The vehicle surrounding monitoring apparatus of this embodiment has basically the same configuration as the above embodiments. Therefore, the same components as those of the above embodiments described earlier, will be assigned the same reference numerals and will not be described in detail.

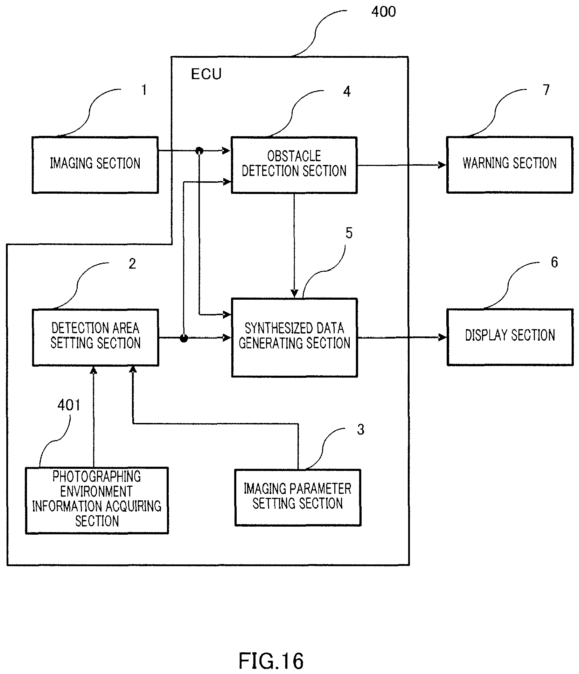

The vehicle surrounding monitoring apparatus of the present embodiment has a configuration adding a photographing environment information acquiring section 401, to the configuration described in embodiment 1, as shown in FIG.16. The detection area setting section 2, imaging parameter setting section 3, obstacle detection section 4, synthesized data generating section 5 and photographing environment information acquiring section 401 are implemented by executing a software program in an ECU 400 installed in the subject vehicle. The setting means is constituted by combining the detection area setting section 2 and photographing environment information acquiring section 401, and the control apparatus according to the present embodiment is constituted by combining at least the detection area setting section 2, photographing environment information acquiring section 401, obstacle detection section 4 and synthesized data generating section 5.

The photographing environment information acquiring section 401 acquires photographing environment detection results as photographing environment information. Then, the photographing environment information acquiring section 401 has this detected photographing environment in the obstacle detection area setting.

This photographing environment information refers to information showing external environmental conditions of the subject vehicle. To be more specific, if an illuminance sensor or a means for sensing the brightness in the external environment from time information and switching information of the subject vehicle's lights is provided in the subject vehicle, this detection result is acquired as photographing environment information. Furthermore, if a raindrop sensor, image sensor, radar sensor and other appropriate information communications means that can detect the occurrence of rainfall, snowfall and fog are provided in the subject vehicle, these detection results are acquired as photographing environment information.

By this means, the obstacle detection area can be changed depending on the photographing environment detected. That is, the detection area can be set on an arbitrary basis by, for example, confining the obstacle detection area to a nearby area of the subject vehicle when it is darker around subject vehicle, and extending the obstacle detection area further when it is brighter around the subject vehicle. For example, also in the event of the occurrence of rainfall or fog, the obstacle detection area may be confined to a nearby area of the subject vehicle. By this means, the accuracy of obstacle detection can be maintained at a certain level or above regardless of the photographing environment.

Thus, according to the present embodiment, it is possible to optimize the detection obstacle detection area for the photographing environment. Furthermore, an optimized detection area is displayed on the display section 6, and the monitoring party can see and check it.

### (Embodiment 5)

The vehicle surrounding monitoring apparatus of embodiment 5 of the present invention will be described now. The vehicle surrounding monitoring apparatus of this embodiment has basically the same configuration as the above embodiments. Therefore, the same components as those of the above embodiments described earlier, will be assigned the same reference numerals and will not be described in detail.

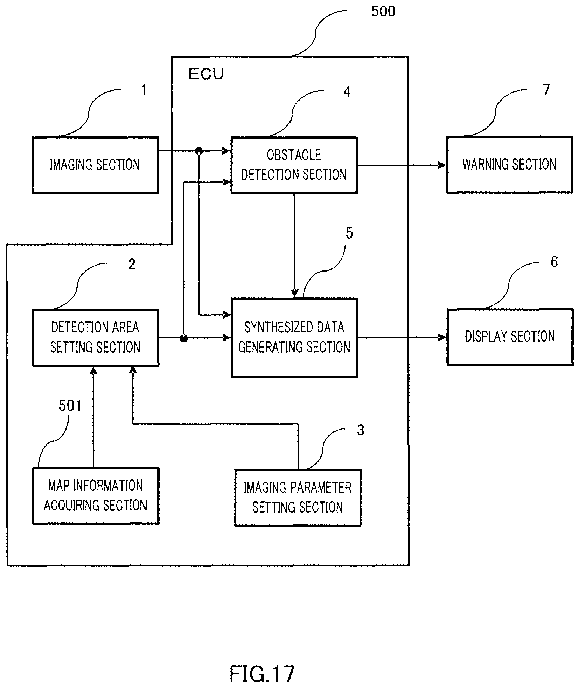

The vehicle surrounding monitoring apparatus of the present embodiment has a configuration adding a map information acquiring section 501 to the configuration described in embodiment 1, as shown in FIG.17. The detection area setting section 2, imaging parameter setting section 3, obstacle detection section 4, synthesized data generating section 5 and map information acquiring section 501 are implemented by executing a software program in an ECU 500 installed in the subject vehicle. The setting means is constituted by combining the detection area setting section 2 and map information acquiring section 501, and the control apparatus according to the present embodiment is constituted by combining at least the detection area setting section 2, map information acquiring section 501, obstacle detection section 4 and synthesized data generating section 5.

The map information acquiring section 501 acquires map information of the surroundings of the subject vehicle. The map information acquiring section 501 has this acquired map information in the obstacle detection area setting.

This map information here includes various items of information that can be acquired using a car-navigation system or other appropriate radio communications means, such as the form of roads (e.g. intersections), road signs (e.g. pedestrian crossing) and facility attributes (e.g. grade school).

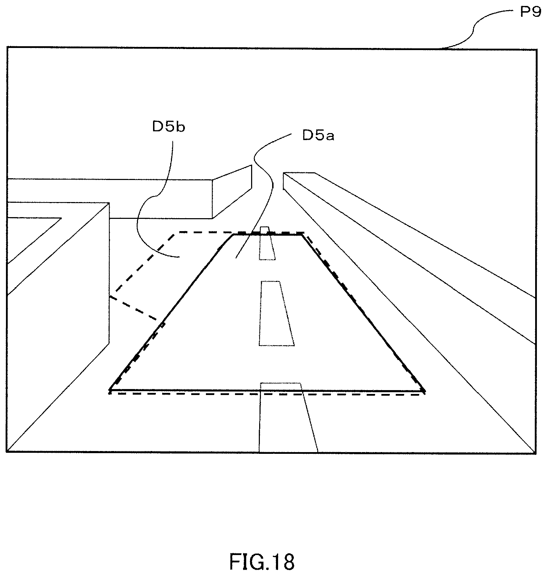

FIG.18 shows an example of variation of a detection area according to map information having been acquired. While the subject vehicle is driving on a straight road, detection area D5a that is extended straight is set in display image P9, to match the form of that road. If map information having been acquired reveals that there is a T junction ahead of the traveling road, detection area D5b is set in a modified or enlarged shape to match the form of the T junction.

By this means, when information about the form of roads can be acquired as map information, the obstacle detection area can be adjusted according the turning of the steering wheel.

Thus, according to the present embodiment, it is possible to optimize the detection obstacle detection area based on map information of the surroundings of the vehicle. Furthermore, an optimized detection area is displayed on the display section 6, and the monitoring party can see and check it.

Embodiments of the present invention have been described above. The above embodiments can be implemented with various changes. The above embodiments can also be implemented in various combinations.

### Industrial Applicability

The control apparatus of the present invention provides an advantage of improving the usability of a vehicle surrounding monitoring apparatus without confusing the monitoring party while monitoring the surroundings of a vehicle, and is applicable to a vehicle surrounding monitoring apparatus.

### Reference Signs List

1 Imaging section
2 Detection area setting section
3 Imaging parameter setting section
4 Obstacle detection section
5 Synthesized data generating section
100, 200, 300, 400, 500 ECU
201 Detection area operation input section
301 Driving state information acquiring section
401 Photographing environment information acquiring section
501 Map information acquiring section

## Claims

1. A control apparatus used to monitor surroundings of a vehicle, comprising:
an imaging parameter setting section (3) adapted to set imaging parameters, which are installation parameters of an imaging section (1) installed in a vehicle;
a detection area setting section (2) adapted to set, based on the imaging parameters, a detection area (D1a) subject to obstacle detection in a photographing range of the imaging section (1) according to a detection result of a driving state of the vehicle;
an obstacle detection section (4) adapted to detect an obstacle in the detection area (D1a) set in an image taken by the imaging section (1); and
a synthesized data generating section (5) adapted to perform image processing to generate display data for drawing a superimposing detection area on a display image, using detection area data received from the detection area setting section (2) and photographed data received from the imaging section (1); wherein:
the driving state of the vehicle includes a state of a steering wheel of the vehicle; and
the detection area setting section (2) is adapted to set the obstacle detection area (D1a) along a path of the vehicle predicted from the detected state of the state of the steering wheel.

2. The control apparatus according to 1, wherein:
the detection area setting section (2) is adapted to set the obstacle detection area (D1a) on a variable basis in the photographing range; and
the photographing range has a fixed angle with respect to the vehicle while the imaging section (1) photographs images.

3. The control apparatus according to 1, wherein:
the detection area setting section (2) is further adapted to set the obstacle detection area (D1a) variable on a variable basis according to an operation input.

4. The control apparatus according to 1, wherein:
the driving state of the vehicle further includes a driving speed of the vehicle; and
the detection area setting section (2) is further adapted to change the obstacle detection area (D1a)
such that the detection area (D1a) is extended further when the driving speed is faster.

5. The control apparatus according to 1, wherein:
the detection area setting section (2) is further adapted to set the obstacle detection area (D1a) on a variable basis according to a detection result of an external environment of the vehicle.

6. The control apparatus according to 1, wherein:
the detection area setting section (2) is further adapted to set the obstacle detection area (D1a) on a variable basis using map information of the surroundings of the vehicle.

7. The control apparatus according to 6, wherein:
the map information includes information to specify a form of a road that exists on a path of the vehicle; and
the detection area setting section (2) is further adapted to set the obstacle detection area (D1a) according to the specified form of the road.

8. A vehicle surrounding monitoring apparatus comprising
a control apparatus according to any of claims 1 to 7;
an imaging section (2); and
a display section (6).

## Patentansprüche

1. Steuergerät zur Überwachung der Umgebung eines Fahrzeugs, umfassend:
einen Bildgebungsparameter-Einstellabschnitt (3), der dazu eingerichtet ist, Bildgebungsparameter einzustellen, die Installationsparameter eines Bildgebungsabschnitts (1) sind, der in einem Fahrzeug installiert ist;
einen Erfassungsbereich-Einstellabschnitt (2), der dazu eingerichtet ist, basierend auf den Bildgebungsparametern einen Erfassungsbereich (D1a) einzustellen, der Gegenstand einer Hinderniserkennung in einem Fotografierbereich des Bildgebungsabschnitts (1) gemäß einem Erfassungsergebnis eines Fahrzustands des Fahrzeugs ist;
einen Hinderniserfassungsabschnitt (4), der dazu eingerichtet ist, ein Hindernis in dem Erfassungsbereich (D1a) zu erfassen, der in einem vom Bildgebungsabschnitt (1) aufgenommenen Bild eingestellt ist; und
einen synthetisierten Datenerzeugungsabschnitt (5), der dazu eingerichtet ist, eine Bildverarbeitung durchzuführen, um Anzeigedaten zum Zeichnen eines überlagerten Erfassungsbereichs auf einem Anzeigebild unter Verwendung von Erfassungsbereichsdaten, die von dem Erfassungsbereichs-Einstellabschnitt (2) empfangen wurden, und fotografierten Daten zu erzeugen, die von dem Abbildungsabschnitt (1) empfangen wurden; wobei:
der Fahrzustand des Fahrzeugs einen Zustand eines Lenkrads des Fahrzeugs umfasst; und
der Erfassungsbereichs-Einstellabschnitt (2) dazu eingerichtet ist, den Hinderniserfassungsbereich (D1a) entlang eines Pfades des Fahrzeugs einzustellen, der aus dem erfassten Zustand des Lenkradzustands vorhergesagt wird.

2. Steuergerät nach Anspruch 1, bei dem:
der Erfassungsbereichs-Einstellabschnitt (2) dazu eingerichtet ist, den Hinderniserfassungsbereich (D1a) auf variabler Basis im Fotografierbereich einzustellen; und
der Fotografierbereich einen festen Winkel in Bezug auf das Fahrzeug hat, während der Bildgebungsabschnitt (1) Bilder fotografiert.

3. Steuergerät nach Anspruch 1, bei dem:
der Erfassungsbereichs-Einstellabschnitt (2) weiterhin dazu eingerichtet ist, die Variable des Hinderniserfassungsbereichs (D1a) auf variabler Basis gemäß einer Betriebseingabe einzustellen.

4. Steuergerät nach Anspruch 1, bei dem:
der Fahrzustand des Fahrzeugs weiterhin eine Fahrgeschwindigkeit des Fahrzeugs umfasst; und
der Erfassungsbereichs-Einstellabschnitt (2) weiterhin dazu eingerichtet ist, den Hinderniserfassungsbereich (D1a) so zu ändern, dass der Erfassungsbereich (D1a) weiter erweitert wird, wenn die Fahrgeschwindigkeit schneller ist.

5. Steuergerät nach Anspruch 1, bei dem:
der Erfassungsbereichs-Einstellabschnitt (2) weiterhin dazu eingerichtet ist, den Hinderniserfassungsbereich (D1a) auf variabler Basis gemäß einem Erfassungsergebnis einer äußeren Umgebung des Fahrzeugs einzustellen.

6. Steuergerät nach Anspruch 1, bei dem:
der Erfassungsbereichs-Einstellabschnitt (2) weiterhin dazu eingerichtet ist, den Hinderniserfassungsbereich (D1a) auf variabler Basis unter Verwendung von Karteninformationen der Umgebung des Fahrzeugs einzustellen.

7. Steuergerät nach Anspruch 6, bei dem:
die Karteninformationen Informationen zum Spezifizieren einer Form einer Straße umfassen, die auf einem Weg des Fahrzeugs vorhanden ist, und
der Erfassungsbereichs-Einstellabschnitt (2) weiterhin dazu eingerichtet ist, den Hinderniserfassungsbereich (D1a) gemäß der spezifizierten Form der Straße einzustellen.

8. Fahrzeugumgebungs-Überwachungsgerät, umfassend
ein Steuergerät nach einem der Ansprüche 1 bis 7;
einen Bildgebungsabschnitt (2); und
einen Anzeigeabschnitt (6).

## Revendications

1. Appareil de contrôle utilisé pour surveiller les alentours d'un véhicule, comprenant :
une section de réglage de paramètres d'imagerie (3) adaptée pour régler des paramètres d'imagerie, qui sont des paramètres d'installation d'une section d'imagerie (1) installée dans un véhicule ;
une section de réglage de surface de détection (2) adaptée pour régler, sur base des paramètres d'imagerie, une surface de détection (D1a) soumise à une détection d'obstacle dans une plage de photographie de la section d'imagerie (1) conformément à un résultat de détection d'un état de conduite du véhicule ;
une section de détection d'obstacle (4) adaptée pour détecter un obstacle dans la surface de détection (D1a) déterminée dans une image prise par la section d'imagerie (1) ; et
une section de génération de données synthétisées (5) adaptée pour mettre en œuvre un traitement d'image pour générer des données d'affichage pour dessiner une surface de détection par surimposition sur une image d'affichage, un utilisant des données de surface de détection reçues de la section de réglage de surface de détection (2) et des données de photographie reçues de la section d'imagerie (1) ;
dans lequel :
l'état de conduite du véhicule comprend l'état d'un volant de direction du véhicule ; et
la section de réglage de surface de détection (2) est adaptée pour régler la surface de détection d'obstacle (D1a) selon une trajectoire du véhicule prédite à partir de l'état détecté de l'état du volant de direction.

2. Appareil de contrôle selon la revendication 1, dans lequel :
la section de réglage de surface de détection (2) est adaptée pour régler la surface de détection d'obstacle (D1a) sur une base variable dans la plage de photographie ; et
la plage de photographie présente un angle fixe par rapport au véhicule pendant que la section d'imagerie (1) photographie des images.

3. Appareil de contrôle selon la revendication 1, dans lequel :
la section de réglage de surface de détection (2) est en outre adaptée pour régler la surface de détection d'obstacle (D1a) variable sur une base variable conformément à une opération d'entrée.

4. Appareil de contrôle selon la revendication 1, dans lequel :
l'état de conduite du véhicule comprend en outre la vitesse de conduite du véhicule ; et
la section de réglage de surface de détection (2) est en outre adaptée pour changer la surface de détection d'obstacle (D1a) de telle sorte que la surface de détection (D1a) est augmentée quand la vitesse de conduite est plus élevée.

5. Appareil de contrôle selon la revendication 1, dans lequel :
la section de réglage de surface de détection (2) est en outre adaptée pour régler la surface de détection d'obstacle (D1a) sur une base variable conformément à un résultat de détection d'un environnement externe du véhicule.

6. Appareil de contrôle selon la revendication 1, dans lequel :
la section de réglage de surface de détection (2) est en outre adaptée pour régler la surface de détection d'obstacle (D1a) sur une base variable en utilisant de l'information cartographique des alentours du véhicule.

7. Appareil de contrôle selon la revendication 6, dans lequel :
l'information cartographique comprend de l'information pour spécifier la forme d'une route qui existe sur une trajectoire du véhicule ; et
la section de réglage de surface de détection (2) est en outre adaptée pour régler la surface de détection d'obstacle (D1a) conformément à la forme spécifiée de la route.

8. Appareil de surveillance des alentours d'un véhicule, comprenant
un appareil de contrôle selon l'une quelconque des revendications 1 à 7 ;
une section d'imagerie (2) ; et
une section d'affichage (6).
